# EUROPÄISCHE PATENTSCHRIFT

(11) **EP 4 331 811 B1**
(45) Veröffentlichungstag und Bekanntmachung des Hinweises auf die Patenterteilung: **28.05.2025**
(21) Anmeldenummer: 23192482.0
(22) Anmeldetag: 21.08.2023
(51) Int. Cl.: B29C 64/118, B29C 64/40, B33Y 10/00, B33Y 70/00

(54) **BEDARFSANGEPASSTE WASSERLÖSLICHE STÜTZSTRUKTUREN FÜR DIE ADDITIVE FERTIGUNG**
DEMAND-MATCHED WATER-SOLUBLE SUPPORT STRUCTURES FOR ADDITIVE MANUFACTURING
STRUCTURES DE SUPPORT HYDROSOLUBLES ADAPTÉES À LA DEMANDE POUR LA FABRICATION ADDITIVE

(30) Priorität: 22.08.2022 DE 102022208661
(43) Veröffentlichungstag der Anmeldung: 06.03.2024
(73) Patentinhaber: Universität Stuttgart, 70174 Stuttgart (DE)
(72) Erfinder: Lajewski, Silvia, 70199 Stuttgart (DE); Bonten, Christian, 70569 Stuttgart (DE)
(74) Vertreter: Müller-Boré & Partner Patentanwälte PartG mbB

(56) Entgegenhaltungen:
- US-A1- 2017 217 087
- US-A1- 2020 254 695
- US-B1- 6 790 403

## Beschreibung

Die vorliegende Erfindung betrifft ein Verfahren zur Herstellung eines Kunststoffbauteiles durch additive Fertigung, wobei das herzustellende Kunststoffbauteil eine komplexe Geometrie aufweisen soll, welche den Einsatz einer Stützstruktur erfordert. Ferner betrifft die vorliegende Erfindung ein Filament, Granulat oder Pulver zur Verwendung als Stützstruktur in dem erfindungsgemäßen Herstellungsverfahren.

Im Stand der Technik sind verschiedene additive Fertigungsverfahren bekannt, um Kunststoffbauteile unter Anwendung eines 3D-Drucks in Kleinserien oder als Prototyp herzustellen, wie etwa das selektive Lasersintern (*engl*. selective laser sintering, SLS) oder das Schmelzschichten (*engl.* fused deposition modeling, FDM). Das auch als Strangablegeverfahren bezeichnete Schmelzschichten ist ein Fertigungsverfahren aus dem Bereich Rapid Prototyping, mit dem ein Bauteil schichtweise aus einem schmelzfähigen Ausgangsstoff, beispielsweise einem schmelzfähigen Kunststoff, aufgebaut wird.

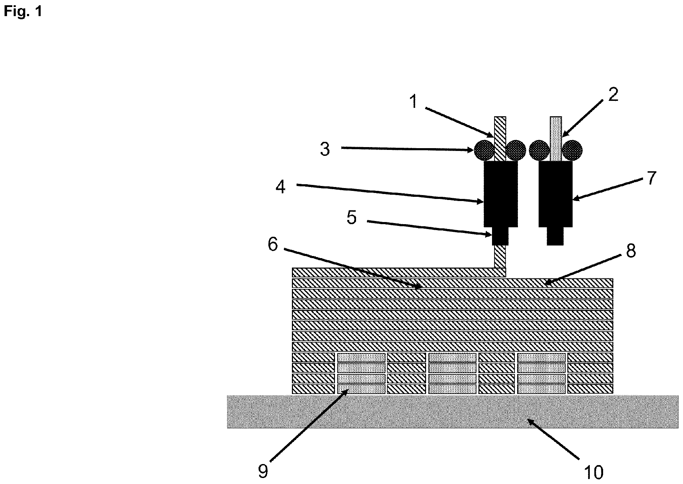

Um in einem derartigen mittels additiver Fertigung herzustellenden Kunststoffbauteil komplexe Geometrien, wie etwa Überhänge bzw. Hinterschneidungen, zu ermöglichen, bedarf es des Einsatzes einer Stützstruktur. Stützstrukturen, welche synonym auch als Stützkonstruktionen bezeichnet werden, kommen überall dort zum Einsatz, wo das herzustellende Kunststoffbauteil freistehend bzw. freihängend sein soll, d. h. an all jenen Stellen, die ansonsten frei im Raum, also ohne Stützung durch eine bereits fertiggestellte Teilkomponente des Kunststoffbauteiles, entstehen würden. Die Stützstruktur vermittelt somit den notwendigen Halt der während der additiven Fertigung aufgetragenen Kunststoffschmelze, welche nach Erstarrung das Kunststoffbauteil bildet. Das Prinzip des Strangablegeverfahrens, eines der am häufigsten angewandten 3D-DruckVerfahren, ist in Fig. 1 veranschaulicht.

Nach der Fertigstellung bzw. dem Erstarren des Kunststoffbauteiles ist dieses in den Bereichen, wo sich die Überhänge bzw. Hinterschneidungen befinden, selbsttragend. Die Stützstruktur ist nunmehr überflüssig bzw. vielmehr störend. Sie muss daher entfernt, also von dem hergestellten Kunststoffbauteil abgetrennt werden. Häufig bestehen die in der additiven Fertigung eingesetzten Stützstrukturen aus dem gleichen Werkstoff wie das herzustellende Kunststoffbauteil. In diesem Fall muss die Stützstruktur nach der Fertigstellung des Kunststoffbauteiles mechanisch von diesem entfernt werden, vorwiegend in zeitintensiver Handarbeit. Selbst eine aufwendige mechanische Nachbearbeitung mittels Schleifen und Polieren kann hierbei nicht immer verhindern, dass Rückstände der Stützstruktur am Kunststoffbauteil haften bleiben, was dessen äußeres Erscheinungsbild negativ beeinflusst. Ebenso können durch die mechanische Nachbearbeitung Kratzer in der Oberfläche des Kunststoffbauteiles entstehen, welche sich ebenfalls negativ auf dessen äußeres Erscheinungsbild auswirken. Werden die Stützstrukturen unter erhöhtem Krafteinsatz entfernt, kann es sogar zu einer Vorschädigung des Kunststoffbauteiles kommen.

Zwar wurde in diesem Zusammenhang durch die Kombination unterschiedlicher Werkstoffe für das Kunststoffbauteil und für die Stützstruktur, welche weniger stark aneinander haften, eine Verbesserung erzielt. Da es jedoch beim Stützen des Kunststoffbauteiles notwendigerweise zu einer Kraftübertragung auf die Stützstruktur kommt, kann zwar die Haftung verringert, jedoch nie vollständig unterbunden werden. Somit lassen sich auch bei Verwendung unterschiedlicher Werkstoffe die vorstehend beschriebenen Probleme, wie sie bislang beim Entfernen der Stützstruktur auftreten, nicht vollständig vermeiden.

Im Stand der Technik sind auch Stützstrukturen aus wasserlöslichen Polymeren, wie etwa Polyvinylpyrrolidon, bekannt, die nach der Fertigstellung des Kunststoffbauteiles ausgewaschen werden können. Die in Wasser gelösten Polymerketten der Stützstruktur können jedoch nicht über eine übliche Kläranlage aus dem Abwasser entfernt werden, womit sie letztlich in die Umwelt gelangen. Die Folgen dieser Art der Umweltverschmutzung auf Mensch und Natur sind noch nicht erforscht.

Der vorliegenden Erfindung liegt somit die Aufgabe zugrunde, ein Verfahren bereitzustellen, welches die Herstellung eines Kunststoffbauteiles komplexer Geometrie durch additive Fertigung erlaubt, wobei sich die hierbei zum Einsatz kommende Stützstruktur nach Beendigung der additiven Fertigung rückstands- und belastungsfrei von dem fertiggestellten Kunststoffbauteil abtrennen lassen soll, ohne dabei dessen äußeres Erscheinungsbild zu beeinträchtigen und ohne dabei idealerweise die Umwelt zu schädigen.

Diese Aufgabe wird durch die in den Ansprüchen gekennzeichneten Ausführungsformen der vorliegenden Erfindung gelöst.

Insbesondere wird erfindungsgemäß ein Verfahren zur Herstellung eines Kunststoffbauteiles durch additive Fertigung bereitgestellt, welches die folgenden Schritte (a) und (b) umfasst:
(a) wiederholtes Ablegen eines schmelzfähigen Materials M₁, welches aus mindestens einem thermoplastischen Kunststoff K₁ gebildet ist, zum Aufbau eines Kunststoffbauteiles mit vorgegebener Geometrie, wobei während des Aufbaus des Kunststoffbauteiles eine Stützstruktur aus einem schmelzfähigen Material M₂ zur Ermöglichung von Überhängen bzw. Hinterschneidungen im Kunststoffbauteil verwendet wird, und
(b) Entfernen der Stützstruktur von dem in Schritt (a) aufgebauten Kunststoffbauteil nach dessen Fertigstellung durch Inkontaktbringen mit einem wässrigen Lösungsmittel,

wobei das schmelzfähige Material M₂ aus mindestens einem thermoplastischen Kunststoff K₂, welcher zumindest mit einem Salz und einem Weichmacher compoundiert ist, gebildet ist und wobei in dem schmelzfähigen Material M₂, bezogen auf 100 Massenteile der Gesamtmenge des mindestens einen thermoplastischen Kunststoffes K₂, 100 bis 150 Massenteile des Salzes und 10 bis 50 Massenteile des Weichmachers vorhanden sind, und
wobei sich das zusammen mit dem mindestens einen thermoplastischen Kunststoff K₂ compoundierte Salz auflöst, sobald es mit dem wässrigen Lösungsmittel in Kontakt kommt, während der mindestens eine thermoplastische Kunststoff K₂ nicht in Lösung geht und als poröses Gebilde zurückbleibt.

Das erfindungsgemäße Herstellungsverfahren ermöglicht ein rückstands- und belastungsfreies Entfernen der Stützstruktur nach Fertigstellung des Kunststoffbauteiles, ohne dass es einer aufwendigen mechanischen Nachbearbeitung, etwa durch Schleifen oder Polieren, bedarf. Die Gefahr einer Beschädigung des Kunststoffbauteiles beim Abtrennen der Stützstruktur wird auf diese Weise nahezu gänzlich minimiert. Erreicht wird dies durch den Einsatz einer Stützstruktur aus einem schmelzfähigen Material M₂, das aus mindestens einem thermoplastischen Kunststoff K₂, welcher zumindest mit einem Salz und einem Weichmacher compoundiert ist, gebildet ist. Wird nach Beendigung der additiven Fertigung das fertiggestellte Kunststoffbauteil einschließlich der noch anhaftenden Stützstruktur mit einem wässrigen Lösungsmittel, insbesondere mit Wasser, in Kontakt gebracht, löst sich das in dem schmelzfähigen Material M₂ enthaltene und zusammen mit dem mindestens einen thermoplastischen Kunststoff K₂ compoundierte Salz auf. Der mindestens eine thermoplastische Kunststoff K₂ geht hingegen nicht in Lösung und bleibt stattdessen als poröses Gebilde zurück. Dieses zerfällt schließlich in Bruchstücke mit Abmessungen im Bereich von wenigen Mikrometern bis hin zu einigen Zentimetern. Der mindestens eine thermoplastische Kunststoff K₂ trennt sich nach dem Auflösen des Salzes somit gewissermaßen von allein ab. Durch die Anwesenheit eines Weichmachers, der ebenfalls in dem schmelzfähigen Material M₂ enthalten und zusammen mit dem mindestens einen thermoplastischen Kunststoff K₂ compoundiert ist, wird zudem sichergestellt, dass die vom Zusatz des Salzes herrührende Sprödigkeit verringert wird. Das schmelzfähige Material M₂, welches dem Aufbau der Stützstruktur dient, behält somit eine ausreichende Verarbeitbarkeit.

Gemäß der vorliegenden Erfindung meint der Begriff "schmelzfähig" im Zusammenhang mit dem schmelzfähigen Material M₁ bzw. M₂, dass zumindest der mindestens eine thermoplastische Kunststoff K₁ bzw. K₂ in einen extrudierbaren Zustand überführt werden kann. Man spricht in diesem Zusammenhang auch von einem Plastifizieren des schmelzfähigen Materials M₁ bzw. M₂. Andere Bestandteile des schmelzfähigen Materials M₁ bzw. M₂ können hingegen in der Kunststoffschmelze als Feststoff dispergiert verbleiben.

Auch wenn der mindestens eine thermoplastische Kunststoff K₂ selbst nicht wasserlöslich ist, kann aufgrund der Wasserlöslichkeit des in dem schmelzfähigen Material M₂ enthaltenen Salzes von einer wasserlöslichen Stützstruktur gesprochen werden. Ist der mindestens eine thermoplastische Kunststoff K₂ zudem biologisch abbaubar, kann die Stützstruktur nach dem Inkontaktbringen mit dem wässrigen Lösungsmittel, insbesondere mit Wasser, bedenkenlos mit dem Abwasser entsorgt werden, ohne hierbei einen schädlichen Eintrag von Kunststoffen in die Umwelt zu verursachen.

Im Folgenden wird das erfindungsgemäße Verfahren zur Herstellung eines Kunststoffbauteiles durch additive Fertigung mit den Schritten (a) und (b) unter Verweis auf Fig. 1 näher beschrieben, wobei die darin gezeigte Darstellung des erfindungsgemäßen Herstellungsverfahrens nicht als einschränkend aufzufassen ist.

In Schritt (a) des erfindungsgemäßen Herstellungsverfahrens wird ein schmelzfähiges Material M₁, welches aus mindestens einem thermoplastischen Kunststoff K₁ gebildet ist, wiederholt zum Aufbau eines Kunststoffbauteiles mit vorgegebener Geometrie abgelegt.

Das wiederholte Ablegen des schmelzfähigen Materials M₁ kann, wie in Fig. 1 dargestellt, mit Hilfe eines (Mini-)Extruders (7) erfolgen. Ein Kunststoffdraht (1) des schmelzfähigen Materials M₁, welcher auch als Kunststofffilament oder nur als Filament bezeichnet wird, tritt - nach Erwärmen über den Schmelzpunkt des mindestens einen thermoplastischen Kunststoffes K₁ hinaus - in Form einer Kunststoffschmelze aus der Düse (5) einer zum Schmelzschichten geeigneten 3D-Druckvorrichtung aus. Durch linienartige Auftragung (8) der Kunststoffschmelze wird nach und nach das Kunststoffbauteil (6) entsprechend der vorgegebenen Geometrie schichtweise aufgebaut, wobei im Rahmen des Schmelzschichtens auf einer bereits fertiggestellten, d. h. erstarrten Teilkomponente des Kunststoffbauteiles weitere Schichten des schmelzfähigen Materials M₁ entstehen.

Das linienartige Auftragen der Kunststoffschmelze, wobei man sinngemäß auch von einem wiederholten Ablegen eines Schmelzstranges spricht, kann auf einer beliebigen für das Schmelzschichten geeigneten Bauplattform (10) erfolgen. Beispielsweise auf einer solchen Bauplattform, wie sie in Fig. 1 dargestellt ist, befindet sich die Stützstruktur (9), welche komplexe Geometrien, wie etwa Überhänge bzw. Hinterschneidungen, im herzustellenden Kunststoffbauteil ermöglicht. In gleicher Weise kann sich die Stützstruktur jedoch auch auf einer bereits fertiggestellten Teilkomponente des Kunststoffbauteiles befinden.

Das erfindungsgemäße Herstellungsverfahren ist nicht auf ein Schmelzschichten beschränkt. So kann vorliegend grundsätzlich jede andere Form der additiven Fertigung zur Herstellung eines Kunststoffbauteiles Anwendung finden, solange diese den Einsatz einer Stützstruktur vorsieht.

In einer Ausführungsform des vorstehend definierten Herstellungsverfahrens wird in Schritt (a) während des Aufbaus des Kunststoffbauteiles die Stützstruktur durch wiederholtes Ablegen des schmelzfähigen Materials M₂ aufgebaut. Dies ist insbesondere dann zweckmäßig, wenn mehrere Stützstrukturen an unterschiedlichen Positionen zum Einsatz kommen sollen, was auch erst im weiteren Verlauf der additiven Fertigung der Fall sein kann. Der Aufbau des Kunststoffbauteiles und der Aufbau der Stützstruktur können hierbei parallel erfolgen. Zweckmäßigerweise kann zum Aufbau des Kunststoffbauteiles und zum Aufbau der Stützstruktur eine 3D-Druckvorrichtung mit mindestens zwei Extrudern und Düsen verwendet werden, wie sie in Fig. 1 exemplarisch dargestellt ist, wobei die 3D-Druckvorrichtung sowohl mit einem Filament (1) des schmelzfähigen Materials M₁ als auch mit einem Filament (2) des schmelzfähigen Materials M₂ ausgestattet ist, wie weiter unten näher beschrieben. Vortrieb (3) sowie Kontaktheizung (4) der 3D-Druckvorrichtung sind in Fig. 1 ebenfalls dargestellt. Anstelle von Filamenten des schmelzfähigen Materials M₁ und des schmelzfähigen Materials M₂ können auch entsprechende Granulate oder Pulver hiervon verwendet werden.

Die vorliegende Erfindung umfasst auch Ausführungsformen, in denen mehr als zwei verschiedene schmelzfähige Materialien zum Einsatz kommen. Beispielsweise können - abgesehen vom schmelzfähigen Material M₂ - zwei verschiedene schmelzfähige Materialien M₁ₐ und M_{1b} verwendet werden, welche vorzugsweise aus zwei verschiedenen Extrudern bereitgestellt werden und das Kunststoffbauteil bilden. Diese zwei verschiedenen schmelzfähigen Materialien M₁ₐ und M_{1b} können sich je nach Zweck sowohl in der Art des mindestens einen thermoplastischen Kunststoffes K₁ als auch in der Farbe oder in anderen Eigenschaften unterscheiden. Das schmelzfähige Material M₂, aus welchem die Stützstruktur gebildet ist/wird, kann hier beispielsweise aus einem dritten Extruder bereitgestellt werden. Weitere Kombinationen von schmelzfähigen Materialien (etwa M₁ₐ/M_{1b}/M_{1c}/M₂ oder M₁/M₂ₐ/M_{2b}) sind ebenfalls im Sinne der vorliegenden Erfindung denkbar.

Da gemäß der vorliegenden Erfindung die Wasserlöslichkeit der Stützstruktur auf der Löslichkeit des mit dem mindestens einen thermoplastischen Kunststoff K₂ compoundierten Salzes beruht, können der mindestens eine thermoplastische Kunststoff K₁ des schmelzfähigen Materials M₁, welches dem Aufbau des Kunststoffbauteiles dient, und der mindestens eine thermoplastische Kunststoff K₂ des schmelzfähigen Materials M₂, welches dem Aufbau der Stützstruktur dient, sogar identisch sein. So bleibt nach Kontakt mit einem wässrigen Lösungsmittel, insbesondere mit Wasser, die Stützstruktur als ein poröses Gebilde aus dem mindestens einen thermoplastischen Kunststoff K₁ = K₂ zurück, welches schließlich in Bruchstücke mit Abmessungen im Bereich von wenigen Mikrometern bis hin zu einigen Zentimetern zerfällt. Das aus dem identischen thermoplastischen Kunststoff aufgebaute Kunststoffbauteil wird aufgrund der fehlenden Wasserlöslichkeit des mindestens einen thermoplastischen Kunststoffes K₁ = K₂ hingegen nicht angegriffen.

Durch die Verwendung identischer thermoplastischer Kunststoffe ist eine Kompatibilität zwischen dem Kunststoffbauteil und der Stützstruktur naturgemäß gewährleistet. Bei Stützstrukturen aus wasserlöslichen Polymeren, wie etwa Polyvinylpyrrolidon, bei dem es sich um einen konventionellen, erdölbasierten Kunststoff handelt, welcher zudem nicht biologisch abbaubar ist, muss für das herzustellende Kunststoffbauteil hingegen zwangsläufig ein anderer thermoplastischer Kunststoff verwendet werden.

Gemäß der vorliegenden Erfindung ist der mindestens eine thermoplastische Kunststoff K₁ des schmelzfähigen Materials M₁, welches dem Aufbau des Kunststoffbauteiles dient, nicht weiter eingeschränkt. So kann grundsätzlich jeder thermoplastische Kunststoff, wie er üblicherweise in der additiven Fertigung von Kunststoffbauteilen eingesetzt wird, auch im erfindungsgemäßen Herstellungsverfahren verwendet werden.

In einer Ausführungsform des vorstehend definierten Herstellungsverfahrens ist der mindestens eine thermoplastische Kunststoff K₁ aus der Gruppe, bestehend aus Polyestern, Polyamiden, Polyurethanen, Polycarbonaten, Polyketonen und Polyolefinen, ausgewählt und gegebenenfalls ein thermoplastisches Elastomer. Falls gewünscht, kann der mindestens eine thermoplastische Kunststoff K₁ also elastomere Eigenschaften aufweisen. Bei dem mindestens einen thermoplastischen Kunststoff K₁ kann es sich sowohl um Homopolymere als auch um Copolymere sowie um entsprechende Gemische hiervon handeln. In einer weiteren Ausführungsform des vorstehend definierten Herstellungsverfahrens ist der mindestens eine thermoplastische Kunststoff K₁ insbesondere aus der Gruppe, bestehend aus Polylactid (PLA), Acrylnitril-Butadien-Styrol-Copolymer (ABS), Acrylnitril-Styrol-Acrylat-Copolymer (ASA), Polymethylmethacrylat (PMMA), Polyetheretherketon (PEEK) und Glykol-modifiziertem Polyethylenterephthalat (PETG), ausgewählt, ohne jedoch hierauf beschränkt zu sein. Gemäß einer bevorzugten Ausführungsform der vorliegenden Erfindung ist der mindestens eine thermoplastische Kunststoff K₁ PLA oder ABS.

Typischerweise sollte der mindestens eine thermoplastische Kunststoff K₁ eine Schmelztemperatur von etwa 250 °C nicht überschreiten, damit seine Verarbeitbarkeit und Handhabung in der additiven Fertigung, beispielsweise im Schmelzschichten, gewährleistet bleiben.

Falls erforderlich, kann der mindestens eine thermoplastische Kunststoff K₁ mit einem oder mehreren Additiven compoundiert sein. Hierdurch lassen sich dem schmelzfähigen Material M₁, welches dem Aufbau des Kunststoffbauteiles dient, bestimmte Eigenschaften verleihen. Neben Weichmachern sind als mögliche Additive Fließhilfsmittel, Schlagzähmodifizierer, Keimbildner und Füllstoffe zu nennen, wie sie weiter unten im Zusammenhang mit dem schmelzfähigen Material M₂ näher beschrieben sind. Das Compoundieren ist ebenfalls weiter unten näher beschrieben.

Gemäß der vorliegenden Erfindung ist der zumindest mit einem Salz und einem Weichmacher compoundierte mindestens eine thermoplastische Kunststoff K₂ des schmelzfähigen Materials M₂, welches dem Aufbau der Stützstruktur dient, nicht weiter eingeschränkt, solange er nicht wasserlöslich ist. Mit der Maßgabe, dass der mindestens eine thermoplastische Kunststoff K₂ nicht wasserlöslich ist, kann grundsätzlich jeder thermoplastische Kunststoff, wie er üblicherweise in der additiven Fertigung, beispielsweise im Schmelzschichten, für Stützstrukturen eingesetzt wird, auch im erfindungsgemäßen Herstellungsverfahren verwendet werden, einschließlich der im Zusammenhang mit dem schmelzfähigen Material M₁ vorstehend genannten thermoplastischen Kunststoffe. Wie im Falle des mindestens einen thermoplastischen Kunststoffes K₁ kann es sich bei dem mindestens einen thermoplastischen Kunststoff K₂ sowohl um Homopolymere als auch um Copolymere sowie um entsprechende Gemische hiervon handeln. Ist der mindestens eine thermoplastische Kunststoff K₂ biologisch abbaubar, wie weiter unten beschrieben, ist eine Entsorgung der Stützstruktur nach der Fertigstellung des Kunststoffbauteiles über das Abwasser bedenkenlos möglich.

In einer Ausführungsform des vorstehend definierten Herstellungsverfahrens ist der mindestens eine thermoplastische Kunststoff K₂ aus der Gruppe, bestehend aus Polyhydroxyalkanoaten (PHA), insbesondere Poly-3-hydroxybutyrat (PHB), Poly(3-hydroxybutyrat-co-3-hydroxyvalerat) (PHBV) und Poly(3-hydroxybutyrat-co-3-hydroxyhexanoat), sowie Polycaprolacton (PCL), thermoplastischer Stärke, Polybutylenadipatterephthalat (PBAT) und Polybutylensuccinat (PBS), ausgewählt, ohne jedoch hierauf beschränkt zu sein. All diesen (Bio-)Polymeren ist gemeinsam, dass sie biologisch abbaubar sind. Während thermoplastische Stärke und PCL in Gewässern biologisch abbaubar sind, sind PBAT und PBS weniger in Gewässern, dafür aber in Böden biologisch abbaubar.

Polyhydroxyalkanoate, welche auch als Polyhydroxyfettsäuren bezeichnet werden, lassen sich sowohl in Gewässern als auch in Böden biologisch abbauen. Bei ihnen handelt es sich um natürlich vorkommende, wasserunlösliche Polyester, welche von Mikroorganismen, beispielsweise Bakterien, aerob oder anaerob abgebaut werden können. Bei dem mindestens einen thermoplastischen Kunststoff K₂ kann es sich demnach um ein Polyhydroxyalkanoat, wie etwa Poly(3-hydroxybuttersäure), handeln. Poly(3-hydroxybuttersäure), welche auch als Poly(3-hydroxybutyrat) bezeichnet wird, ist ein strukturell einfaches und in der Natur häufig vorkommendes Polyhydroxyalkanoat. PHB wird durch Fermentation gebildet, beispielsweise auf Basis von Zucker oder Stärke, und besteht üblicherweise aus 1.000 bis mehreren 100.000 3-Hydroxybuttersäureeinheiten. Zumeist leitet sich die natürlich vorkommende Poly(3-hydroxybuttersäure) von dem Monomer mit (R)-Konfiguration ab. Es handelt sich demnach um Poly-(R)-(3-hydroxybutyrat). Das Monomer mit (S)-Konfiguration und das entsprechende Poly-(S)-(3-hydroxybutyrat) spielen demgegenüber lediglich eine untergeordnete Rolle, ebenso wie die racemische Mischung aus Poly-(R)-(3-hydroxybutyrat) und Poly-(S)-(3-hydroxybutyrat). Natürlich vorkommende Poly(3-hydroxybuttersäure) weist einen Schmelzpunkt von etwa 175 °C auf, oberhalb von 200 °C tritt Zersetzung ein. In einem Teil ihrer Eigenschaften ist Poly(3-hydroxybuttersäure) mit Polypropylen vergleichbar, insbesondere hinsichtlich Kristallinität, Glasübergangstemperatur und Zugfestigkeit. Vorliegend wird, wenn auf Poly(3-hydroxybuttersäure) Bezug genommen wird, jedwedes Stereoisomer hiervon, d. h. gleich welcher Taktizität, verstanden. Neben PHB sind insbesondere auch das Copolymer von 3-Hydroxybuttersäure und 3-Hydroxyvaleriansäure, also Poly(3-hydroxybutyrat-co-3-hydroxyvalerat), und das Copolymer von 3-Hydroxybuttersäure und 3-Hydroxyhexansäure, also Poly(3-hydroxybutyrat-co-3-hydroxyhexanoat), als besonders geeignete thermoplastische Kunststoffe für das schmelzfähige Material M₂ zu nennen. 3-Hydroxyvaleriansäure und 3-Hydroxyhexansäure folgen in der homologen Reihe auf 3-Hydroxybuttersäure. Sie weisen also im Vergleich hierzu eine bzw. zwei zusätzliche Methylengruppen auf, wodurch bei nahezu gleichbleibender biologischer Abbaubarkeit die Dehnfähigkeit zunimmt und die Sprödigkeit abnimmt.

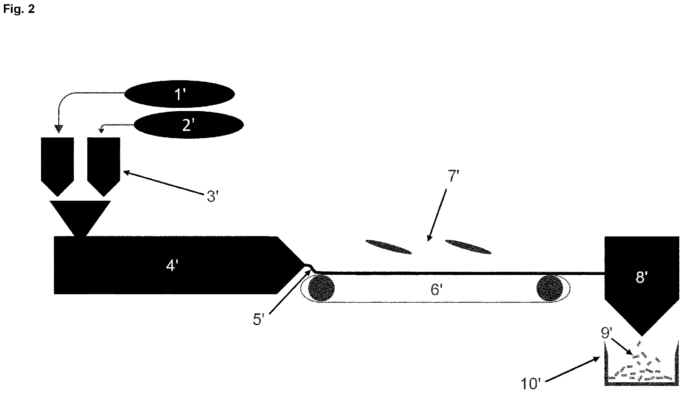

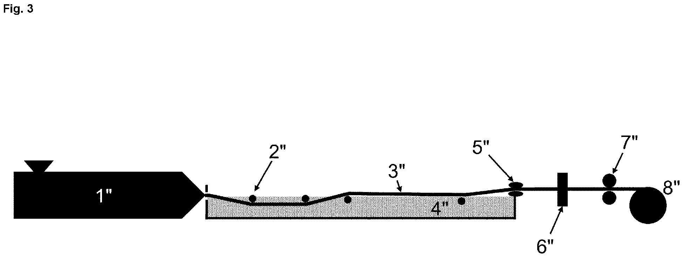

Gemäß der vorliegenden Erfindung ist der mindestens eine thermoplastische Kunststoff K₂ zumindest mit einem Salz und einem Weichmacher compoundiert, d. h. gemischt. Das Salz und der Weichmacher werden als Zuschlagstoffe dem mindestens einen thermoplastischen Kunststoff K₂ beigemischt. Dies gilt in gleicher Weise für die nachstehend genannten Additive, sofern vorgesehen. Zu diesem Zweck können alle Verfahren eingesetzt werden, wie sie beim Compoundieren in der Kunststofftechnik üblich sind. Typischerweise erfolgt die Compoundierung des thermoplastischen Kunststoffes K₂ mit dem Salz und dem Weichmacher in einem Doppelschneckenextruder, wodurch ein Granulat erhalten wird, wie in Fig. 2 dargestellt. Der Doppelschneckenextruder kann dabei gleichläufig oder gegenläufig sein. Anstelle eines Doppelschneckenextruders kann jedoch auch ein Planetwalzenextruder oder ein Ko-Kneter verwendet werden. Bei Bedarf kann das erhaltene Granulat unter Verwendung eines Einschneckenextruders zu einem Filament verarbeitet werden, wie in Fig. 3 dargestellt.

Grundsätzlich ist die vorliegende Erfindung, was das Salz zur Compoundierung mit dem mindestens einen thermoplastischen Kunststoff K₂ anbelangt, nicht besonders eingeschränkt. Zweckmäßigerweise werden hierzu Salze verwendet, welche neben einer hohen Löslichkeit in dem verwendeten wässrigen Lösungsmittel, insbesondere in Wasser, mit diesem weder sauer noch basisch reagieren, d. h. den pH-Wert des wässrigen Lösungsmittels, insbesondere von Wasser, nahezu unverändert lassen. Auch sollten die eingesetzten Salze lediglich eine geringe Hygroskopizität aufweisen, damit es nicht bereits während der additiven Fertigung zu einer übermäßigen Aufnahme von Wasser kommt, was ansonsten die Stabilität der Stützstruktur nachteilig beeinflussen würde. Idealerweise sind die zum Einsatz kommenden Salze weder umweltgefährlich noch anderweitig bedenklich.

In einer Ausführungsform des vorstehend definierten Herstellungsverfahrens ist das Salz, mit welchem der mindestens eine thermoplastische Kunststoff K₂ compoundiert ist, aus der Gruppe, bestehend aus Natriumchlorid, Natriumsulfat, Natriumnitrat, Kaliumchlorid, Kaliumsulfat und Kaliumnitrat, ausgewählt, ohne jedoch hierauf beschränkt zu sein. Die Chloride, Sulfate und Nitrate der leichten Alkalimetalle Natrium und Kalium zeichnen sich durch ihre hohe Wasserlöslichkeit aus. Auch sind sie ökologisch weitestgehend unbedenklich. Grundsätzlich können jedoch auch die entsprechenden Chloride, Sulfate und Nitrate von Erdalkalimetallen wie Magnesium und Calcium zur Compoundierung verwendet werden, wie auch diejenigen anderer Metalle, sofern sie die vorstehend genannten Kriterien erfüllen.

Was den Weichmacher zur Compoundierung mit dem mindestens einen thermoplastischen Kunststoff K₂ anbelangt, unterliegt die vorliegende Erfindung ebenso wenig einer besonderen Einschränkung. Neben Weichmachern, welche in dem verwendeten wässrigen Lösungsmittel, insbesondere in Wasser, löslich sind, können vorliegend auch Weichmacher eingesetzt werden, welche in dem verwendeten wässrigen Lösungsmittel, insbesondere in Wasser, unlöslich sind. Idealerweise sind die zum Einsatz kommenden Weichmacher weder umweltgefährlich noch anderweitig bedenklich.

In einer Ausführungsform des vorstehend definierten Herstellungsverfahrens ist der Weichmacher Polyethylenglykol (PEG). Naturgemäß nimmt mit zunehmender Kettenlänge der Schmelzpunkt von PEG zu. Ab einer Molmasse von etwa 1.500 g/mol liegt PEG bei Raumtemperatur als wachsartiger Feststoff vor. Neben Polyethylenglykol, welches in Gewässern biologisch abbaubar ist, sind insbesondere auch Zitronensäureester, Glycerine und ihre Derivate wie etwa Tributyrin und Triacetin, Fettsäureester wie etwa Methyloleat sowie epoxidierte Ester und Öle wie etwa epoxidiertes Sojabohnenöl (ESO) als besonders geeignete Weichmacher zu nennen.

Gemäß der vorliegenden Erfindung sind in dem schmelzfähigen Material M₂, bezogen auf 100 Massenteile der Gesamtmenge des mindestens einen thermoplastischen Kunststoffes K₂, 100 bis 150 Massenteile des Salzes und 10 bis 50 Massenteile des Weichmachers, vorzugsweise 115 bis 135 Massenteile des Salzes und 20 bis 35 Massenteile des Weichmachers, beispielsweise 125 Massenteile des Salzes und 25 Massenteile des Weichmachers, vorhanden. Ist der Anteil des Weichmachers in Bezug auf den Anteil des Salzes zu niedrig, ist das schmelzfähige Material M₂ zu spröde. Die Folge ist eine unzureichende Verarbeitbarkeit, welche sich beispielsweise in einem Verstopfen oder in einer Abnutzung der Düse sowie in einem Abreißen des Schmelzstranges beim wiederholten Ablegen des schmelzfähigen Materials M₂ zum Aufbau der Stützstruktur manifestiert. So reißt etwa beim Strangablegeverfahren, wenn das schmelzfähige Material M₂ zu spröde ist, das Filament bei der Zuführung in den Extruder ab. Ist der Anteil des Weichmachers in Bezug auf den Anteil des Salzes hingegen zu hoch, ist das schmelzfähige Material M₂ nicht steif genug. Als Folge hiervon verformt sich die Stützstruktur unter der Last des Kunststoffbauteiles, wodurch es im Ergebnis auch zu einer Verformung des Kunststoffbauteiles kommt.

Bei Bedarf kann der mindestens eine thermoplastische Kunststoff K₂ weiter mit einem oder mehreren Additiven, ausgewählt aus der Gruppe, bestehend aus Fließhilfsmitteln, Schlagzähmodifizierern, Keimbildnern und Füllstoffen, compoundiert sein. Hierdurch lassen sich dem schmelzfähigen Material M₂, welches dem Aufbau der Stützstruktur dient, bestimmte Eigenschaften verleihen. Mit Fließhilfsmitteln wie etwa Epoxiden, Peroxiden oder Isocyanaten kann die Viskosität des schmelzfähigen Materials M₂ eingestellt werden. Mit Schlagzähmodifizierern lässt sich die Energieaufnahmefähigkeit des schmelzfähigen Materials M₂ beeinflussen. Durch den Zusatz von Keimbildnern, welche auch als Nukleierungsmittel bezeichnet werden, wie etwa Bornitrid, das in kommerziell erhältlichem PHBV bereits enthalten ist, lassen sich die Bruchdehnung sowie die Zähigkeit des schmelzfähigen Materials M₂ erhöhen. Auch wird durch den Zusatz von Keimbildnern eine Nachkristallisation verhindert, welche anderenfalls zu einem Verziehen (*engl.* warping) der Stützstruktur führt. Mit Füllstoffen wie etwa Holzmehl, Kohle, Graphit, Cellulosepulver, Schalen- und Kernmehl kann schließlich Einfluss auf die Dichte, den E-Modul, die Härte, die Wärmeformbeständigkeit und die Schwindungsneigung des schmelzfähigen Materials M₂ genommen werden.

In Schritt (b) des erfindungsgemäßen Herstellungsverfahrens wird die Stützstruktur von dem in Schritt (a) aufgebauten Kunststoffbauteil nach dessen Fertigstellung durch Inkontaktbringen mit einem wässrigen Lösungsmittel entfernt.

Gemäß der vorliegenden Erfindung ist das wässrige Lösungsmittel nicht besonders eingeschränkt und schließt sämtliche Lösungsmittel ein, die einen Wasseranteil von mindestens 50 Vol.-% aufweisen. Je nach Anwendung kann das wässrige Lösungsmittel Anteile von organischen Lösungsmitteln, wie Alkoholen usw. oder Additive, wie spezielle Salze usw. aufweisen. Auch kann das wässrige Lösungsmittel Säuren oder Basen enthalten. Aufgrund der einfacheren Handhabbarkeit und aus ökologischen Gründen ist die Verwendung eines wässrigen Lösungsmittels, welches im Wesentlichen, d. h. aus mindestens 95 Vol.-% Wasser besteht, bevorzugt. Gemäß einer spezifischen Ausführungsform der vorliegenden Erfindung ist das wässrige Lösungsmittel Wasser.

Das zusammen mit dem mindestens einen thermoplastischen Kunststoff K₂ compoundierte Salz löst sich, sobald es mit dem wässrigen Lösungsmittel, insbesondere mit Wasser, in Kontakt kommt, auf. Zurück bleibt ein poröses Gebilde des mindestens einen thermoplastischen Kunststoffes K₂, welcher nicht in Lösung geht. Da dieses poröse Gebilde mechanisch instabil ist, zerfällt es in Bruchstücke mit Abmessungen im Bereich von wenigen Mikrometern bis hin zu einigen Zentimetern, wodurch es sich von dem fertiggestellten Kunststoffbauteil leicht abtrennen lässt. Es bedarf somit keiner aufwendigen mechanischen Nachbearbeitung, um die Stützstruktur von dem fertiggestellten Kunststoffbauteil zu entfernen. Vielmehr trennt sich im Rahmen des erfindungsgemäßen Herstellungsverfahrens die Stützstruktur in Folge des Inkontaktbringens mit dem wässrigen Lösungsmittel, insbesondere mit Wasser, gewissermaßen von allein ab. Idealerweise zerfällt die Stützstruktur bereits während des Auflösens des compoundierten Salzes in ausreichend kleine Bruchstücke, so dass nahezu keinerlei Rückstände am fertiggestellten Kunststoffbauteil verbleiben und keine Nachbearbeitung notwendig ist. Wird für die Stützstruktur ein thermoplastischer Kunststoff verwendet, welcher nicht biologisch abbaubar ist, werden die vorstehend erwähnten Bruchstücke der Stützstruktur zweckmäßigerweise aus dem wässrigen Lösungsmittel abfiltriert, um nicht in die Umwelt zu gelangen. Ein derartiges Abfiltrieren ist nur möglich, da der mindestens eine thermoplastische Kunststoff K₂ selbst nicht wasserlöslich ist.

Ist der mindestens eine thermoplastische Kunststoff K₂ ein natürlich vorkommendes Polymer, wie dies bei den vorstehend aufgezeigten Biopolymeren, beispielsweise Polyhydroxyalkanoaten, wie etwa Polyhydroxybuttersäure, der Fall ist, können im wässrigen Lösungsmittel, insbesondere in Wasser, vorhandene Mikroorganismen, Pilze und Enzyme die Bruchstücke der Stützstruktur aus dem mindestens einen thermoplastischen Kunststoff K₂ abbauen. Neben der vereinfachten Abtrennbarkeit der Stützstruktur, welche auf die Compoundierung mit dem Salz sowie dessen Herauslösen aus der Stützstruktur bei Inkontaktbringen mit dem wässrigen Lösungsmittel, insbesondere mit Wasser, zurückgeführt werden kann, lässt sich bei Verwendung eines biologisch abbaubaren thermoplastischen Kunststoffes ferner also eine vereinfachte Entsorgung der Stützstruktur herbeiführen. Da die Bruchstücke aus dem mindestens einen thermoplastischen Kunststoff K₂ vergleichsweise geringe Abmessungen aufweisen, lassen sich diese einfach über den Abfluss entsorgen. Gerade im Abwasser befindet sich eine Vielzahl von Mikroorganismen, wie etwa Bakterien, die einen Abbau unter aeroben oder anaeroben Bedingungen, unter denen ihr Wachstum möglich ist, erlauben. Abbauprodukte sind hierbei im Wesentlichen Kohlenstoffdioxid und Wasser. In einer Ausführungsform des vorstehend definierten Herstellungsverfahrens ist der mindestens eine thermoplastische Kunststoff K₂ entsprechend biologisch abbaubar. Eines Abfiltrierens der vorstehend erwähnten Bruchstücke der Stützstruktur aus dem wässrigen Lösungsmittel bedarf es in diesem Fall also nicht, kann jedoch aus Gründen der Nachhaltigkeit dennoch wünschenswert sein, um etwa ein Recycling zu ermöglichen.

In Einklang mit den vorstehenden Ausführungen kann der mindestens eine thermoplastische Kunststoff K₂, welcher selbst nicht wasserlöslich ist, zu diesem Zweck aus der Gruppe, bestehend aus Polyhydroxyalkanoaten, insbesondere Poly(3-hydroxybutyrat), Poly(3-hydroxybutyrat-co-3-hydroxyvalerat) und Poly(3-hydroxybutyrat-co-3-hydroxyhexanoat), sowie Polycaprolacton, thermoplastischer Stärke, Polybutylenadipatterephthalat und Polybutylensuccinat, ausgewählt sein, ohne jedoch hierauf beschränkt zu sein.

In einem weiteren Aspekt betrifft die vorliegende Erfindung ein Filament, Granulat oder Pulver des schmelzfähigen Materials M₂ zur Verwendung als Stützstruktur beispielsweise in dem erfindungsgemäßen Herstellungsverfahren. Für das erfindungsgemäße Filament, Granulat oder Pulver gelten in Bezug auf das schmelzfähige Material M₂ alle Ausführungen, wie weiter oben im Zusammenhang mit dem erfindungsgemäßen Herstellungsverfahren beschrieben, auf gleiche Weise. Ohne hierauf beschränkt zu sein, kann das erfindungsgemäße Filament einen Durchmesser im Bereich von 1 mm bis 4 mm, beispielsweise 1,5 mm bis 3,5 mm, aufweisen. Handelsübliche Durchmesser sind z. B. 1,75 mm oder 2,85 mm. Die vorstehend genannten Abmessungen gelten auch für den Durchmesser des erfindungsgemäßen Granulats.

Die vorliegende Erfindung erlaubt ein einfaches, rückstands- und belastungsfreies Abtrennen der Stützstruktur von einem Kunststoffbauteil komplexer Geometrie, welches durch additive Fertigung, beispielsweise Schmelzschichten, hergestellt wird. Da es keiner mechanischen Nachbearbeitung bedarf, kommt es zu keiner Beeinträchtigung des äußeren Erscheinungsbildes des hergestellten Kunststoffbauteiles. Insbesondere wird dessen Oberflächenqualität nicht negativ beeinflusst. Erreicht wird dies durch den Einsatz einer Stützstruktur aus einem schmelzfähigen Material M₂, das aus mindestens einem thermoplastischen Kunststoff K₂, welcher zumindest mit einem Salz und einem Weichmacher compoundiert ist, gebildet ist.

Darüber hinaus erlaubt die vorliegende Erfindung auch ein einfaches Entsorgen der Stützstruktur, sofern der mindestens eine thermoplastische Kunststoff K₂ biologisch abbaubar ist. In diesem Fall kann das mit der Stützstruktur in Kontakt gebrachte wässrige Lösungsmittel, insbesondere Wasser, beispielsweise einfach in den Abfluss gegeben werden. Im Abwasser enthaltene Mikroorganismen, Pilze oder Enzyme bauen den in Folge des Inkontaktbringens mit dem wässrigen Lösungsmittel, insbesondere mit Wasser, in Bruchstücke zerfallenen mindestens einen thermoplastischen Kunststoff K₂ schließlich ab. Da im Rahmen des erfindungsgemäßen Herstellungsverfahrens weder Säuren noch Basen eingesetzt werden müssen, werden Mikroorganismen, wie etwa Bakterien, welche empfindlich auf den pH-Wert des Wassers reagieren, durch die Entsorgung der Stützstruktur mit dem Abwasser auch nicht in ihrer Lebensgrundlage gestört.

Aufgrund ihrer vergleichsweise geringen Abmessungen weisen die aus der Stützstruktur hervorgehenden Bruchstücke des mindestens einen thermoplastischen Kunststoffes K₂ eine hohe spezifische Oberfläche auf, was den biologischen Abbauprozess weiter beschleunigt. Mittelbar verbleiben somit keine Rückstände des aus der Stützstruktur stammenden mindestens einen thermoplastischen Kunststoffes K₂ in der Umwelt. Demgegenüber kommt es im Falle einer Stützstruktur aus wasserlöslichen, aber nicht biologisch abbaubaren thermoplastischen Kunststoffen lediglich zu einer physikalischen Auflösung der Polymerketten, d. h. die Polymerketten bleiben intakt. Ändern sich die Umgebungsbedingungen, beispielsweise Temperatur, Mineralstoffgehalt oder pH-Wert, kann der mindestens eine thermoplastische Kunststoff K₂ wieder ausfallen und verbleibt sodann als Mikroplastik, etwa in Form einzelner Polymerketten, in der Umwelt. Über Böden oder Gewässer gelangt dieser schließlich in die Nahrungskette. All jene Probleme weisen das erfindungsgemäße Herstellungsverfahren sowie das erfindungsgemäße Filament, Granulat oder Pulver nicht auf, insbesondere wenn der für die Stützstruktur verwendete mindestens eine thermoplastische Kunststoff K₂ biologisch abbaubar ist.

### Figuren

Fig. 1 zeigt schematisch das wiederholte Ablegen eines Schmelzstranges im Rahmen des Schmelzschichtens, einschließlich der dabei zum Einsatz kommenden Stützstruktur. Diese dient der Realisierung von Kunststoffbauteilen komplexer Geometrie, welche etwa Überhänge bzw. Hinterschneidungen aufweisen.
Fig. 2 zeigt schematisch die Compoundierung des thermoplastischen Kunststoffes K₂ mit dem Salz und dem Weichmacher in einem Doppelschneckenextruder, wodurch ein Granulat erhalten wird.
Fig. 3 zeigt schematisch die Verarbeitung des Granulats zu einem Filament unter Verwendung eines Einschneckenextruders.
Fig. 4 zeigt Photographien von (a) Stützstrukturen und von (b) mit deren Hilfe fertiggestellten Kunststoffbauteilen für verschiedene schmelzfähige Materialien M₂.
Fig. 5 zeigt die Ergebnisse eines Schlagzähigkeitstests für verschiedene schmelzfähige Materialien M₂.

### Bezugszeichen:

- 1: Kunststoffdraht/-filament des schmelzfähigen Materials M₁ für das Kunststoffbauteil
- 2: Kunststoffdraht/-filament des schmelzfähigen Materials M₂ für die Stützstruktur
- 3: Vortrieb
- 4: Kontaktheizung
- 5: Düse
- 6: Kunststoffbauteil
- 7: Extruder
- 8: linienartige Auftragung
- 9: Stützstruktur
- 10: Bauplattform
- 1': Dryblend (thermoplastischer Kunststoff K₂ und Weichmacher)
- 2': Salz
- 3': Dosiereinheiten
- 4': Doppelschneckenextruder
- 5': extrudiertes Compound
- 6': Förderband
- 7': Ventilatoren
- 8': Granulator
- 9': Granulat
- 10': Auffangbehälter
- 1": Einschneckenextruder
- 2": Positionierrollen
- 3": Filament
- 4": Wasserbad
- 5": Abstreiftuch
- 6": Laservermessung der Filamente
- 7": Abzugsrollen
- 8": Filamentspule

### Beispiele

Die folgenden Beispiele dienen der weiteren Erläuterung der vorliegenden Erfindung, ohne jedoch hierauf beschränkt zu sein.

### Bauteilfertigung mittels 3D-Druckvorrichtung

Mittels einer handelsüblichen 3D-Druckvorrichtung wurden Kunststoffbauteile gefertigt, welche aufgrund ihres Überhangs den Einsatz einer Stützstruktur erforderten. Zum Aufbau der Stützstruktur kamen zwei verschiedene schmelzfähige Materialien M₂ zum Einsatz, im Folgenden als Material A und Material B bezeichnet. Die Zusammensetzung der entsprechenden Compounds (in Massenteilen der jeweiligen Komponenten) ist in nachstehender Tabelle 1 wiedergegeben:

**Tabelle 1**

| | Massenteile PHBV | Massenteile PEG | Massenteile NaCl |
|---|---|---|---|
| Material A | 100 | 50 | 100 |
| Material B | 100 | 25 | 125 |

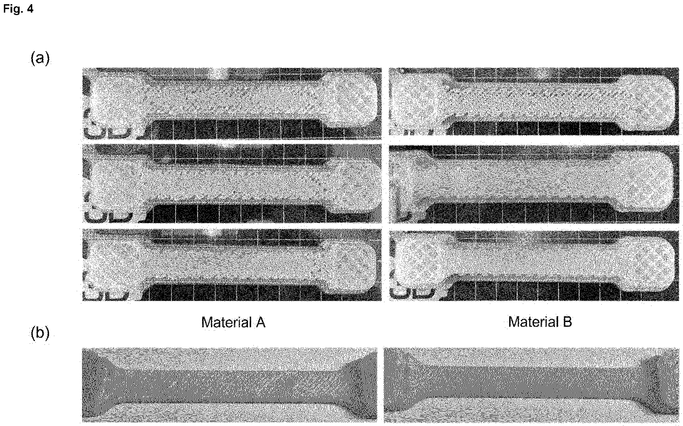

Die Stützstrukturen wurden sodann durch Strangablegen aufgebaut, wobei dies bei einer Ablegegeschwindigkeit von 36 mm/s, einer Düsentemperatur von 190 °C, einer Plattformtemperatur von 75 °C und einer relativen Durchflussrate von etwa 105 % erfolgte. Photographien der so aufgebauten Stützstrukturen sind in Fig. 4(a) gezeigt, links für Material A und rechts für Material B. Von oben nach unten sind jeweils drei konsekutive Aufnahmen des Aufbauprozesses der Stützstruktur gezeigt. Dabei lässt sich erkennen, dass die Stützstruktur aus dem Material A im Vergleich zu derjenigen aus dem Material B eine inhomogenere Oberflächenstruktur aufwies. Erklärt werden kann dies anhand der niedrigeren Viskosität im Falle des Materials A, bedingt durch den höheren Anteil des Weichmachers in der Zusammensetzung. Wie sich den Photographien aus Fig. 4(b) entnehmen lässt, wurde die Oberflächenstruktur letztlich in das herzustellende Kunststoffbauteil übertragen. Trotz der inhomogeneren Oberflächenstruktur ließen sich auch mit der Stützstruktur aus dem Material A noch zufriedenstellende Ergebnisse erzielen.

### Mechanische Eigenschaften

Um die mechanischen Eigenschaften der Stützstruktur näher zu untersuchen, wurde die Schlagzähigkeit in Abhängigkeit der Zusammensetzung des schmelzfähigen Materials bestimmt. Hierzu kamen vier verschiedene schmelzfähige Materialien M₂ zum Einsatz, im Folgenden als Material C, Material D, Material E und Material F bezeichnet. Die Zusammensetzung der entsprechenden Compounds (in Massenteilen der jeweiligen Komponenten) ist in nachstehender Tabelle 2 wiedergegeben:

**Tabelle 2**

| | Massenteile PHBV | Massenteile PEG | Massenteile NaCl |
|---|---|---|---|
| Material C | 100 | 40 | 60 |
| Material D | 100 | 00 | 42,86 |
| Material E | 100 | 50 | 100 |
| Material F | 100 | 00 | 66,67 |

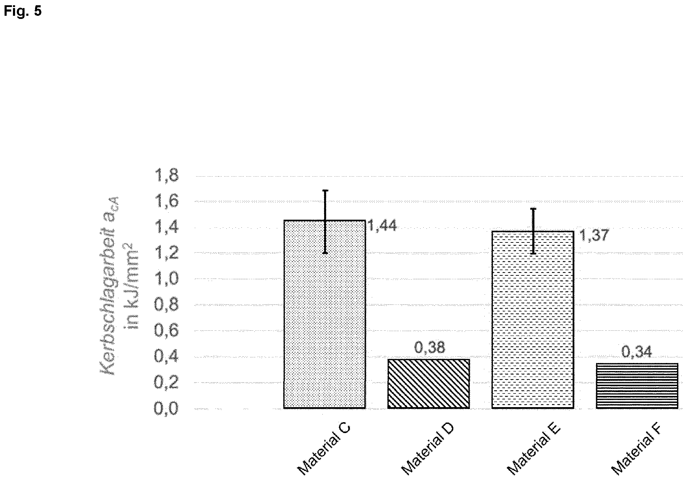

Die Ergebnisse sind in Fig. 5 veranschaulicht. Im Falle der Materialien D und F, welche keinen Weichmacher enthielten, wurde eine vergleichsweise niedrige Kerbschlagarbeit ermittelt. Demgegenüber wurde im Falle der Materialien C und E eine vergleichsweise hohe Kerbschlagarbeit ermittelt. Im Gegensatz zu den Stützstrukturen aus den Materialien D und F brachen die Stützstrukturen aus den Materialien C und E demnach erst bei deutlich höherem Energieeintrag. Zurückzuführen ist dies auf die Anwesenheit des Weichmachers, welcher zu einer Verringerung der Sprödigkeit führte.

### Löslichkeit in Wasser

Schließlich wurde noch die Löslichkeit der Stützstruktur in Wasser näher untersucht. Hierzu kamen fünf verschiedene schmelzfähige Materialien M₂ zum Einsatz, im Folgenden als Material G, Material H, Material I, Material J und Material K bezeichnet. Die Zusammensetzung der entsprechenden Compounds (in Massenteilen der jeweiligen Komponenten) ist in nachstehender Tabelle 3 wiedergegeben:

**Tabelle 3**

| | Massenteile PHBV | Massenteile PEG | Massenteile NaCl |
|---|---|---|---|
| Material G | 100 | 50 | 100 |
| Material H | 100 | 40 | 60 |
| Material I | 100 | 25 | 125 |
| Material J | 100 | 11,11 | 111,11 |
| Material K | 100 | 24 | 76 |

Die jeweiligen Stützstrukturen wurden in demineralisiertes Wasser eingetaucht und darin für insgesamt vier Stunden bei einer Temperatur von 70 °C unter Rühren bei 100 U/min aufbewahrt. Die Auswertung erfolgte über Auswiegen nach dem Trocknen bei Raumtemperatur. Nachstehende Tabelle 4 zeigt die Ergebnisse:

**Tabelle 4**

| | Mᵥₒᵣₕₑᵣ in g | m_{nachher} in g | m_{löslich} in g | m_{gelöst} in g | m_{gelöst}/m_{löslich} |
|---|---|---|---|---|---|
| Material G | 6,2 | 3,5 | 3,7 | 2,7 | 73% |
| Material H | 5,8 | 3,8 | 2,9 | 2,0 | 69% |
| Material I | 7,3 | 4,1 | 4,4 | 3,2 | 73% |
| Material J | 7,2 | 4,4 | 4,0 | 2,8 | 70% |
| Material K | 7,2 | 5,6 | 3,6 | 1,6 | 44% |

Der lösliche Anteil ergibt sich hierbei aus der Gesamtmenge des Weichmachers und des Salzes. Es zeigt sich, dass in allen Fällen nach vier Stunden ein erheblicher Anteil der Stützstruktur in Wasser aufgelöst war.

Zusammenfassend lässt sich feststellen, dass durch die Anwesenheit des Weichmachers im schmelzfähigen Material M₂ die Sprödigkeit der Stützstruktur, welche vom Zusatz des Salzes herrührt, verringert werden kann, ohne dabei die Funktionsweise der Stützstruktur nachteilig zu beeinflussen.

## Patentansprüche

1. Verfahren zur Herstellung eines Kunststoffbauteiles durch additive Fertigung, umfassend die folgenden Schritte (a) und (b):
(a) wiederholtes Ablegen eines schmelzfähigen Materials M₁, welches aus mindestens einem thermoplastischen Kunststoff K₁ gebildet ist, zum Aufbau eines Kunststoffbauteiles mit vorgegebener Geometrie, wobei während des Aufbaus des Kunststoffbauteiles eine Stützstruktur aus einem schmelzfähigen Material M₂ zur Ermöglichung von Überhängen bzw. Hinterschneidungen im Kunststoffbauteil verwendet wird, und
(b) Entfernen der Stützstruktur von dem in Schritt (a) aufgebauten Kunststoffbauteil nach dessen Fertigstellung durch Inkontaktbringen mit einem wässrigen Lösungsmittel,
wobei das schmelzfähige Material M₂ aus mindestens einem thermoplastischen Kunststoff K₂, welcher zumindest mit einem Salz und einem Weichmacher compoundiert ist, gebildet ist und wobei in dem schmelzfähigen Material M₂, bezogen auf 100 Massenteile der Gesamtmenge des mindestens einen thermoplastischen Kunststoffes K₂, 100 bis 150 Massenteile des Salzes und 10 bis 50 Massenteile des Weichmachers vorhanden sind, und
wobei sich das zusammen mit dem mindestens einen thermoplastischen Kunststoff K₂ compoundierte Salz auflöst, sobald es mit dem wässrigen Lösungsmittel in Kontakt kommt, während der mindestens eine thermoplastische Kunststoff K₂ nicht in Lösung geht und als poröses Gebilde zurückbleibt.

2. Verfahren nach Anspruch 1, wobei die Stützstruktur in Schritt (a) während des Aufbaus des Kunststoffbauteiles durch wiederholtes Ablegen des schmelzfähigen Materials M₂ aufgebaut wird.

3. Verfahren nach Anspruch 2, wobei zum Aufbau des Kunststoffbauteiles und der Stützstruktur eine 3D-Druckvorrichtung mit mindestens zwei Extrudern und Düsen verwendet wird, wobei die 3D-Druckvorrichtung sowohl mit einem Filament, Granulat oder Pulver des schmelzfähigen Materials M₁ als auch mit einem Filament, Granulat oder Pulver des schmelzfähigen Materials M₂ ausgestattet ist.

4. Verfahren nach einem der Ansprüche 1 bis 3, wobei der mindestens eine thermoplastische Kunststoff K₁ und der mindestens eine thermoplastische Kunststoff K₂ identisch sind.

5. Verfahren nach einem der Ansprüche 1 bis 4, wobei der mindestens eine thermoplastische Kunststoff K₁ aus der Gruppe, bestehend aus Polyestern, Polyamiden, Polyurethanen, Polycarbonaten, Polyketonen und Polyolefinen, ausgewählt und gegebenenfalls ein thermoplastisches Elastomer ist.

6. Verfahren nach Anspruch 5, wobei der mindestens eine thermoplastische Kunststoff K₁ aus der Gruppe, bestehend aus Polylactid, Acrylnitril-Butadien-Styrol-Copolymer, Acrylnitril-Styrol-Acrylat-Copolymer, Polymethylmethacrylat, Polyetheretherketon und Glykol-modifiziertem Polyethylenterephthalat, ausgewählt ist.

7. Verfahren nach einem der Ansprüche 1 bis 6, wobei der mindestens eine thermoplastische Kunststoff K₂ aus der Gruppe, bestehend aus Polyhydroxyalkanoaten, insbesondere Poly(3-hydroxybutyrat), Poly(3-hydroxybutyrat-co-3-hydroxyvalerat) und Poly(3-hydroxybutyrat-co-3-hydroxyhexanoat), sowie Polycaprolacton, thermoplastischer Stärke, Polybutylenadipatterephthalat und Polybutylensuccinat, ausgewählt ist.

8. Verfahren nach einem der Ansprüche 1 bis 7, wobei das Salz aus der Gruppe, bestehend aus Natriumchlorid, Natriumsulfat, Natriumnitrat, Kaliumchlorid, Kaliumsulfat und Kaliumnitrat, ausgewählt ist.

9. Verfahren nach einem der Ansprüche 1 bis 8, wobei der Weichmacher Polyethylenglykol ist.

10. Verfahren nach einem der Ansprüche 1 bis 9, wobei der mindestens eine thermoplastische Kunststoff K₂ weiter mit einem oder mehreren Additiven, ausgewählt aus der Gruppe, bestehend aus Fließhilfsmitteln, Schlagzähmodifizierern, Keimbildnern und Füllstoffen, compoundiert ist.

11. Verfahren nach einem der Ansprüche 1 bis 10, wobei der mindestens eine thermoplastische Kunststoff K₂ biologisch abbaubar ist.

12. Filament, Granulat oder Pulver des schmelzfähigen Materials M₂ zur Verwendung als Stützstruktur in dem Verfahren nach einem der Ansprüche 1 bis 11.

## Claims

1. A method for producing a plastic component by additive manufacturing, comprising the following steps (a) and (b):
(a) repeatedly depositing a meltable material M₁ formed from at least one thermoplastic K₁ for building up a plastic component having a predetermined geometry, wherein a support structure made of a meltable material M₂ is used during the build-up of the plastic component enabling overhangs and/or undercuts in the plastic component, and
(b) removing the support structure from the plastic component built up in step (a) after its completion by bringing it into contact with an aqueous solvent,
wherein the meltable material M₂ is formed from at least one thermoplastic K₂ compounded with at least a salt and a plasticizer, wherein in the meltable material M₂, 100 to 150 parts by mass of the salt and 10 to 50 parts by mass of the plasticizer are present based on 100 parts by mass of the total amount of the at least one thermoplastic K₂, and
wherein the salt compounded with the at least one thermoplastic K₂ dissolves as soon as it comes into contact with the aqueous solvent, whereas the at least one thermoplastic K₂ does not dissolve and remains as a porous structure.

2. The method according to claim 1, wherein the support structure is built up in step (a) during the build-up of the plastic component by repeatedly depositing the meltable material M₂.

3. The method according to claim 2, wherein a 3D printing device having at least two extruders and nozzles is used for the build-up of the plastic component and the support structure, wherein the 3D printing device is provided both with a filament, granulate or powder of the meltable material M₁ and with a filament, granulate or powder of the meltable material M₂.

4. The method according to any one of claims 1 to 3, wherein the at least one thermoplastic K₁ and the at least one thermoplastic K₂ are identical.

5. The method according to any one of claims 1 to 4, wherein the at least one thermoplastic K₁ is selected from the group consisting of polyesters, polyamides, polyurethanes, polycarbonates, polyketones and polyolefins, and is optionally a thermoplastic elastomer.

6. The method according to claim 5, wherein the at least one thermoplastic K₁ is selected from the group consisting of polylactide, acrylonitrile butadiene styrene, acrylonitrile styrene acrylate, poly(methyl methacrylate), polyether ether ketone and glycol-modified poly(ethylene terephthalate).

7. The method according to any one of claims 1 to 6, wherein the at least one thermoplastic K₂ is selected from the group consisting of polyhydroxyalkanoates, in particular poly(3-hydroxybutyrate), poly(3-hydroxybutyrate-co-3-hydroxyvalerate) and poly(3-hydroxybutyrate-co-3-hydroxyhexanoate), as well as polycaprolactone, thermoplastic starch, polybutylene adipate terephthalate and polybutylene succinate.

8. The method according to any one of claims 1 to 7, wherein the salt is selected from the group consisting of sodium chloride, sodium sulfate, sodium nitrate, potassium chloride, potassium sulfate and potassium nitrate.

9. The method according to any one of claims 1 to 8, wherein the plasticizer is polyethylene glycol.

10. The method according to any one of claims 1 to 9, wherein the at least one thermoplastic K₂ is further compounded with one or more additives selected from the group consisting of flow aids, impact modifiers, nucleating agents and fillers.

11. The method according to any one of claims 1 to 10, wherein the at least one thermoplastic K₂ is biodegradable.

12. A filament, granulate or powder of the meltable material M₂ for use as a support structure in the method according to any one of claims 1 to 11.

## Revendications

1. Procédé de fabrication d'un composant plastique par fabrication additive, comprenant les étapes suivantes (a) et (b) :
(a) dépôt répété d'un matériau fusible M₁ qui est formé d'au moins un plastique thermoplastique K₁ pour la construction d'un composant plastique à géométrie prédéfinie, dans lequel une structure d'appui en un matériau fusible M₂ est utilisée pour permettre des surplombs ou contredépouilles dans le composant plastique pendant la construction du composant plastique, et
(b) retrait de la structure d'appui du composant plastique construit à l'étape (a) après son achèvement par mise en contact avec un solvant aqueux,
dans lequel le matériau fusible M₂ est formé d'au moins un plastique thermoplastique K₂ qui est mélangé au moins avec un sel et un plastifiant, et dans lequel 100 à 150 parties en masse du sel et 10 à 50 parties en masse du plastifiant sont présentes dans le matériau fusible M₂ par rapport à 100 parties en masse de la quantité totale de l'au moins un plastique thermoplastique K₂, et
dans lequel le sel mélangé conjointement à l'au moins un plastique thermoplastique K₂ se dissout dès qu'il vient en contact avec le solvant aqueux tandis que l'au moins un plastique thermoplastique K₂ n'entre pas en solution et reste en tant que produit poreux.

2. Procédé selon la revendication 1, dans lequel la structure d'appui est construite à l'étape (a) pendant la construction du composant plastique par dépôt répété du matériau fusible M₂.

3. Procédé selon la revendication 2, dans lequel un dispositif d'impression 3D avec au moins deux extrudeuses et buses est utilisé pour la construction du composant plastique et de la structure d'appui, dans lequel le dispositif d'impression 3D est équipé aussi bien d'un filament, granulat ou d'une poudre du matériau fusible M₁ que d'un filament, granulat ou d'une poudre du matériau fusible M₂.

4. Procédé selon une des revendications 1 à 3, dans lequel l'au moins un plastique thermoplastique K₁ et l'au moins un plastique thermoplastique K₂ sont identiques.

5. Procédé selon une des revendications 1 à 4, dans lequel l'au moins un plastique thermoplastique K₁ est sélectionné parmi le groupe constitué de polyesters, polyamides, polyuréthanes, polycarbonates, polycétones et polyoléfines, et est éventuellement un élastomère thermoplastique.

6. Procédé selon la revendication 5, dans lequel l'au moins un plastique thermoplastique K₁ est sélectionné parmi le groupe constitué du polylactide, d'un copolymère d'acrylonitrile-butadiène-styrène, d'un copolymère d'acrylonitrile-styrène-acrylate, du polyméthacrylate de méthyle, du polyétheréthercétone et du polyéthylène téréphtalate modifié par un glycol.

7. Procédé selon une des revendications 1 à 6, dans lequel l'au moins un plastique thermoplastique K₂ est sélectionné parmi le groupe constitué de polyhydroxyalcanoates, notamment du poly(3-hydroxybutyrate), poly(3-hydroxybutyrate-co-3-hydroxyvalérate) et poly(3-hydroxybutyrate-co-3-hydroxyhexanoate) ainsi que de la polycaprolactone, de l'amidon thermoplastique, du polybutylène adipate téréphtalate et du polybutylène succinate.

8. Procédé selon une des revendications 1 à 7, dans lequel le sel est sélectionné parmi le groupe constitué du chlorure de sodium, sulfate de sodium, nitrate de sodium, chlorure de potassium, sulfate de potassium et nitrate de potassium.

9. Procédé selon une des revendications 1 à 8, dans lequel le plastifiant est le polyéthylèneglycol.

10. Procédé selon une des revendications 1 à 9, dans lequel l'au moins un plastique thermoplastique K₂ est en outre mélangé avec un ou plusieurs additifs, sélectionnés parmi le groupe constitué d'auxiliaires d'écoulement, modificateurs de résilience, agents de germination et charges.

11. Procédé selon une des revendications 1 à 10, dans lequel l'au moins un plastique thermoplastique K₂ peut être dégradé biologiquement.

12. Filament, granulat ou poudre du matériau fusible M₂ pour l'utilisation en tant que structure d'appui dans le procédé selon une des revendications 1 à 11.
